Europäisches Patentamt

European Patent Office

Office européen des brevets

(19)

(11) **EP 1 037 483 B1**

(12)                     **EUROPEAN PATENT SPECIFICATION**

(45) Date of publication and mention
of the grant of the patent:
**25.09.2002 Bulletin 2002/39**

(51) Int Cl.⁷: **H04Q 7/32**, H04B 7/005

(21) Application number: **99400648.4**

(22) Date of filing: **16.03.1999**

(54) **A method for dynamically choosing a best parameter value for a power control algorithm in a mobile radiocommunication system**

Verfahren zum dynamischen Auswählen eines optimalen Parameterwertes für einen Leistungsregelungsalgorithmus in einem mobilen Funkkommunikationssystem

Méthode pour sélectionner dynamiquement une valeur paramétrique optimale pour un algorithme de contrôle de puissance dans un système de radiocommunication mobile

(84) Designated Contracting States:
**DE ES FI FR GB IT SE**

(43) Date of publication of application:
**20.09.2000 Bulletin 2000/38**

(73) Proprietor: **ALCATEL**
**75008 Paris (FR)**

(72) Inventors:
• **Agin, Pascal**
  **94370 Sucy en Brie (FR)**
• **Boch, Sébastien**
  **75014 Paris (FR)**

(74) Representative: **El Manouni, Josiane et al**
**COMPAGNIE FINANCIERE ALCATEL**
**Dépt. Propr. Industrielle,**
**30, avenue Kléber**
**75116 Paris (FR)**

(56) References cited:
| | |
|---|---|
| **EP-A- 0 682 418** | **EP-A- 0 741 467** |
| **EP-A- 0 762 668** | **EP-A- 0 886 389** |
| **WO-A-95/08876** | **WO-A-97/34372** |
| **US-A- 5 732 328** | **US-A- 5 790 940** |
| **US-A- 5 799 005** | **US-A- 5 812 938** |

**Description**

The present invention is in a general way concerned with mobile radiocommunication systems.

The present invention is more particularly concerned with power control techniques used in such systems to improve performances (in terms of quality of service, of capacity,...etc.) despite the movements of users, i.e. despite continuous changes in their respective locations with respect to fixed infrastructures in such systems.

The present invention is in particular applicable to mobile radiocommunication systems of CDMA ("Code Division Multiple Access") type. CDMA is a multiple access technique which makes it possible for several users to be simultaneously active on a same frequency, using different spreading codes.

As is known, CDMA systems use two types of power control techniques, a so-called open-loop power control technique, and a so-called closed loop power control technique (also called hereinafter CLPC). These power control techniques may be recalled for example for the uplink transmission direction, i.e. from MS ("Mobile Station") to BTS ("Base Transceiver Station"). In the open-loop power control, a MS transmit power is controlled based on the power received by this MS from a BTS. In the CLPC, a MS transmit power is controlled based on the transmission quality of the link between this MS and a BTS, as estimated at this BTS.

The transmission quality of a link between a MS and a BTS depends on the ratio of the received signal power and the interference power, also called SIR (Signal-to-Interference Ratio). When the SIR of a MS is low, or equivalently when the powers of the other MSs are much higher than its power, its performances dramatically decrease. The CLPC algorithm enables to keep the SIR of each user as constant as possible.

The principle of the CLPC algorithm is that the BTS periodically estimates the SIR of the received signal from each MS, and compares this estimated SIR to a target SIR ($SIR_{target}$). If the estimated SIR is lower than the target SIR, the BTS sends a command to the MS for the MS to increase its transmit power. Otherwise, the BTS sends a command to the MS for the MS to decrease its transmit power. The target SIR is chosen by the BTS as a function of the required quality of service.

Such a principle however requires that the environment is not changing too fast, in particular that MSs speed is not too high.

WO 98/51026 teaches to adapt the power control step size of the CLPC algorithm, in particular as a function of MSs mobility requirements (the BTS in particular assigning a larger power control step size for MSs having higher mobility requirements).

However this reference does not teach to choose the power control step size in a dynamic way, so as to always use the best control step size, as a function of the environment.

The present invention has for its object a method for performing such a dynamic choice, thereby improving the performances of a mobile radiocommunication system using a power control algorithm having various possible power control step sizes. Besides, the present invention is not limited to that parameter which is constituted by the power control step size, but applies to any parameter characteristic of a power control algorithm, such as for example its repetition period, or any other parameter.

These and other objects of the present invention will become more apparent from the following description taken in conjunction with the accompanying drawings and appended claims:

- figure 1 is a diagram intended to illustrate a CLPC algorithm, according to prior art,
- figure 2 is a diagram intended to illustrate a CLPC algorithm, modified so as to include a method according to the invention,
- figure 3 is a diagram intended to illustrate the type of means required in a mobile network entity and in a mobile station to perform a method according to the present invention, in the uplink transmission direction of a mobile radiocommunication system,
- figure 4 is a diagram intended to illustrate the type of means required in a mobile station and in a mobile network entity to perform a method according to the present invention, in the downlink transmission direction of a mobile radiocommunication system.

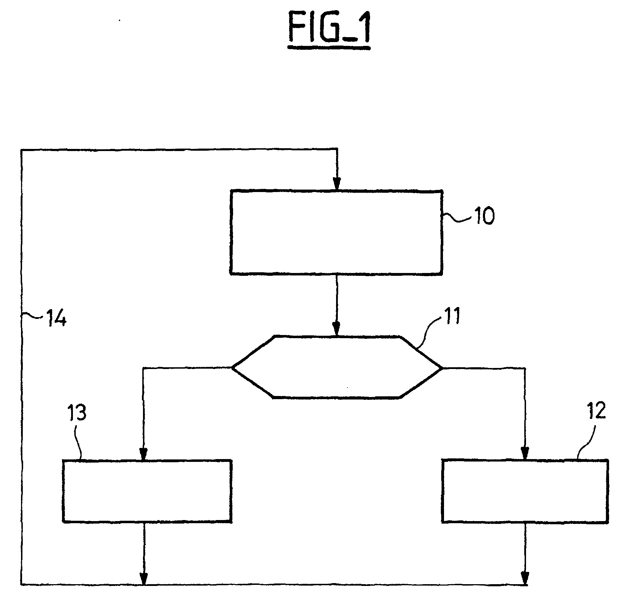

As recalled in figure 1, a current CLPC algorithm comprises the following steps, for each time $t_i$:

➢ At step 10, the BTS estimates the average received SIR during a period T,
➢ At step 11, the BTS compares this SIR to a target SIR, $SIR_{target}$,
➢ If $SIR > SIR_{target}$, at step 12 the BTS sends a "down" power control command to the MS, for the MS to decrease its power by $\delta$ dB, where $\delta$ is a parameter of the algorithm,
➢ If $SIR < SIR_{target}$, at step 13 the BTS sends an "up" power control command to the MS, for the MS to increase its power by $\delta$ dB .

This is periodically repeated, with a repetition period T, as illustrated by loop 14.

As an example, a CLPC algorithm modified so as to include a method according to the invention will be described in the following. It should however be noted that the present invention may be used with other types of power control algorithms than the CLPC one. Besides, this description will be made as an example for the uplink transmission direction, but it should be noted that it may also be used for the downlink transmission direction. Besides, this description will be made as an example for the case where said parameter is the power control step size, but it should be noted that the invention may be used for any other parameter characteristic of the algorithm (such as for example its repetition period, or any other parameter).

A CLPC algorithm modified so as to include a method according to the invention may be described as follows.

Let $t_i = iT$ be the time when the i-th power control command, $\varepsilon_i \doteq 1$ (+ 1 ="up", -1 ="down") is applied at the MS.

Let $\delta^{(n)}$ (n=1...M, where M is a parameter of this algorithm) be the various possible power control step sizes of this algorithm.

At time t; the MS changes its power by $\varepsilon_i \delta_i$ dB (where $\delta_i$ is the power control step size used at time $t_i$).

Thus, the transmit power of the MS at time $t_i$ may be expressed as:

$$C_i \approx C_0 + \sum_{k=1}^{i} \varepsilon_k \delta_k$$

where $C_0$ is the initial transmit power of the MS at time $t_0$.

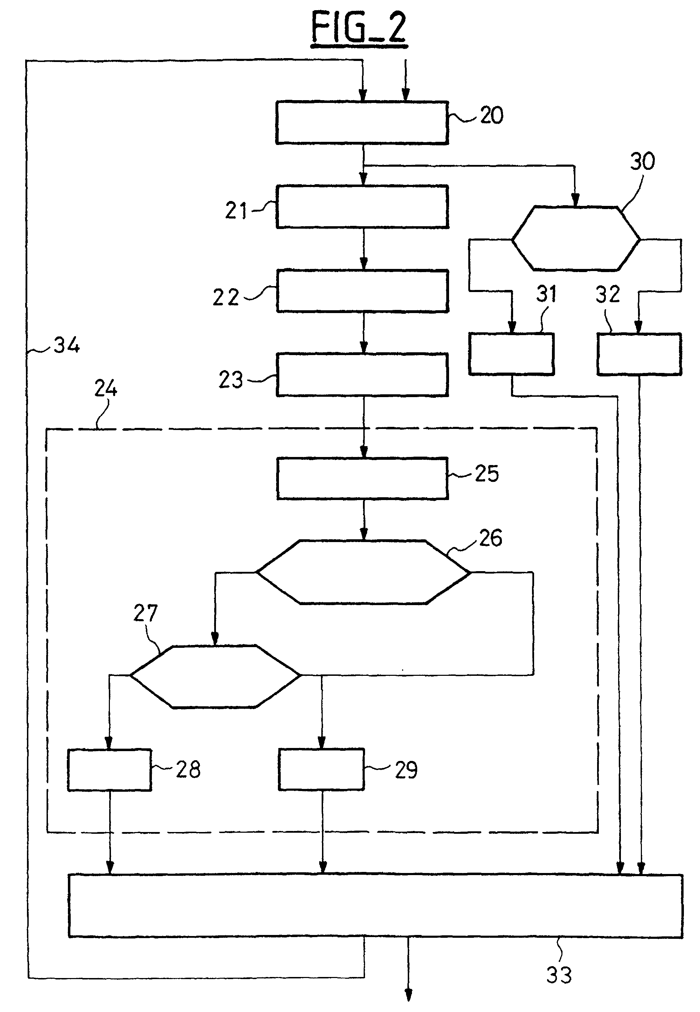

As illustrated in figure 2, a CLPC algorithm modified so as to include a method according to the invention, to choose dynamically the best power control step size amongst M possible power control step sizes $\delta^{(n)}$, comprises the following steps, for each time $t_i$:

> ➢ At step 20, the BTS estimates the average received $SIR_i$. This SIR is estimated and averaged on a period T just after the signal transmitted by the MS at time $t_i$ has been received,
> > At step 21, the BTS estimates, for each n, the SIR noted $SIR_i^{(n)}$ that would have been observed if the power control step size had always been $\delta^{(n)}$, on the considered time-interval beginning at $t_{k=1}$ and ending at $t_{k=i}$, which has been considered for determining the transmit power of the MS at time $t_i$. This SIR may be computed as

$$SIR_i^{(n)} = SIR_i + \sum_{k=1}^{i} (\delta^{(n)} \varepsilon_k^{(n)} - \delta_k \varepsilon_k),$$

where $\varepsilon_i^{(n)}$ is the power control command that would have been sent to the MS at time $t_i$ if the power control step size had always been $\delta^{(n)}$ on the considered time-interval,

> ➢ At step 22, the BTS estimates $\varepsilon_{i+1}^{(n)}$ (in view of computing $SIR_{i+1}^{(n)}$ at $t_{i+1}$):

- if $SIR_i^{(n)} < SIR_{target}$, $\varepsilon_{i+1}^{(n)} = 1$
- if $SIR_i^{(n)} > SIR_{target}$, $\varepsilon_{i+1}^{(n)} = -1$

> ➢ At step 23, the BTS estimates, for each n, the variance $(\sigma_i^{(n)})^2$ of the SIR that would have been obtained if the power control step size had always been $\delta^{(n)}$ on the considered time-interval. This variance may be computed as:

$$(\sigma_i^{(n)})^2 = (1-c)^2 (\sigma_{i-1}^{(n)})^2 + c(SIR_i^{(n)} - SIR_{target})^2$$

where c is a real parameter between 0 and 1 (usually close to 0).

> ➢ At step 24, the BTS chooses the best power control step size to be assigned to the MS : the BTS first finds, at step 25, $n_0$ such that $\sigma_i^{(n_0)}$ is the smallest variance amongst $\sigma_i^{(n)}$ for all n ($n_0$ depends on i) , then:

◆ If the current power control step size is not $\delta^{n0}$, but $\delta^{ni}$ $(=\delta_i)$, as checked at step 26, and if $\sigma_{n0} < \sigma_{n1} - \alpha_{n1}$, (as checked at step 27), the BTS generates at step 28 a power control step size command for the MS, in order for the MS to change its power control step size from $\delta^{n1}$ to $\delta^{n0}$,
◆ Otherwise, the power control step size does not change, as indicated by step 29, i.e. no corresponding power control step size command needs to be generated for the MS.

Parameters such as $\alpha_{n1}$ are positive parameters of this algorithm. In practice they are close to 0 but usually different from 0 in order to avoid changing the power control step size too frequently.

Besides, step 24 can be done periodically every period hT, where h is an integer larger than or equal to 1, in order to avoid changing the power control step size too frequently and therefore avoid sending too many command messages to the MS.

➢ At step 30, the BTS compares $SIR_i$ to $SIR_{target}$

◆ If $SIR_i > SIR_{target}$, the BTS provides at step 31 a "down" power control command for the MS
◆ If $SIR_i < SIR_{target}$, the BTS provides at step 32 an "up" power control command for the MS.

Such an "up" or "down" power control command provided at step 34 or 35 is combined at step 33 with a power control step size command provided at step 28 or 29, so as to generate a resulting power control command to be sent to the MS.

Besides, the above disclosed algorithm is periodically repeated, as illustrated by loop 34.

Thus, in this example, the above disclosed algorithm comprises the steps of:

- regularly estimating a deviation value, representative of a deviation between an estimated transmission quality and a target transmission quality, for each possible power control step size,
- choosing as best power control step size that power control step size which leads to the lowest deviation value.

It is to be noted that one of the possible power control step sizes $\delta^{(n)}$ can be 0 dB, which corresponds to the case where the power control is inactive.

Besides, in the example disclosed, said estimated transmission quality is represented by an estimated signal-to-interference ratio. Other examples could be possible; in particular said estimated transmission quality could be represented by a received signal power.

Besides, in the example disclosed, said estimated deviation value is the variance of the estimated transmission quality; any estimator other than the variance could also be used.

The example disclosed is particularly advantageous in that it allows a recursive implementation of steps 20-24 of of the algorithm, as appears from the above description of this algorithm, but other examples could also be possible.

Besides, a number of other variants could be envisaged from the above description of the algorithm.

As an example, said considered time-interval may not be referred to the time origin $t_o$, but to the current time $t_i$ minus some interval, e.g. $t_i$ to $t_{i-N}$, where N is a parameter of this algorithm.

This change is applied by replacing:

- 
$$C_i = C_0 + \sum_{k=1}^{i} \varepsilon_k \delta_k \text{ by } C_i = C_{i-N} + \sum_{k=0}^{N-1} \varepsilon_{i-k} \delta_{i-k} \text{ ,}$$

and

- 
$$SIR_i^{(n)} = SIR_i + \sum_{k=1}^{i} (\delta^{(n)} \varepsilon_k^{(n)} - \delta_k \varepsilon_k)$$

by

$$SIR_i^{(n)} = SIR_i + \sum_{k=0}^{N-1} (\delta^{(n)} \varepsilon_{i-k}^{(n)} - \delta_{i-k} \varepsilon_{i-k})$$

As another example, in the above-disclosed algorithm, when receiving a power control command $\varepsilon_j = \pm 1$, the MS computes its new power as $C_{i+1} = C_i + \varepsilon_i . \delta_i$

The proposed algorithm can be generalized to any function $C_{i+1} = f_i(C_i, \varepsilon_i, \delta_i)$ where $f_i$ are some functions that can also depend from any previous power $C_i$ and power control command $\varepsilon_i$, as well as any other parameter.

If $f_i^{(n)}$ is the function such as $f_i^{(n)}(C_i) = f_i^{(n)}(C_i, \varepsilon_i^{(n)}, \delta^{(n)})$, the expression of $SIR^{(n)}_i$ becomes:

$$SIR_i^{(n)} = f_i^{(n)} of_{i-1}^{(n)} o...of_1^{(n)} o(f_i of_{i-1} o...of_1)^{-1} (SIR_i)$$

where the symbol "o" is used to indicate a composition function; and $^{-1}$ is used to indicate an inverse function.

The algorithm could be also exended to the case where the power control step size would be different when the MS transmit power must increase and when the MS transmit power must decrease. This change is applied by replacing

$$SIR_i^{(n)} = SIR_i + \sum_{k=1}^{i} (\delta^{(n)} \varepsilon_k^{(n)} - \delta_k \varepsilon_k)$$

by

$$SIR_i^{(n)} = SIR_i + \sum_{k=1}^{i} (\delta_+^{(n)} \frac{1 + \varepsilon_k^{(n)}}{2} - \delta_-^{(n)} \frac{1 - \varepsilon_k^{(n)}}{2} - \delta_k \varepsilon_k)$$

and by indicating that a BTS sends a message to the MS to change the two step sizes simultaneously, i.e. the couple $(\delta_+^{(n)}, \delta_-^{(n)})$.

The present invention also has for its object an entity for a mobile radiocommunication network (such as in particular BTS), as well as a mobile station (MS), for carrying out such a method.

The present invention may be used for power control in the uplink transmission direction (from MS to BTS) as well as in the downlink transmission direction (from BTS to MS).

In the uplink direction:

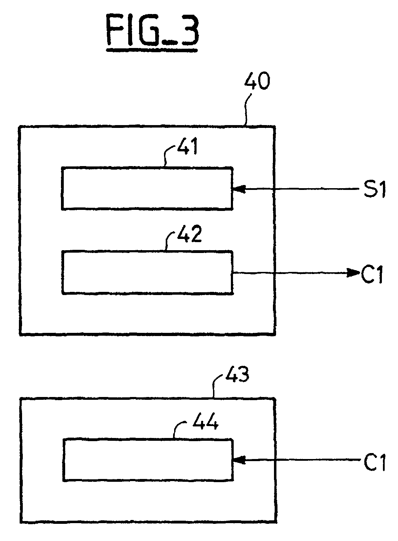

- a mobile radiocommunication network entity, such as illustrated at 40 in figure 3, essentially comprises, further to other classical means (not mentioned here and which may be classical):

  - means 41 for performing such a method, from signals noted S1 received from a mobile station
  - means 42 for sending corresponding power control commands noted C1 to a mobile station,

- a mobile station, such as illustrated at 43 on figure 3, essentially comprises, further to other classical means (not mentioned here and which may be classical):

  - means 44 for receiving power control commands C1 from a mobile radiocommunication network entity, provided according to such a method . In the downlink direction:

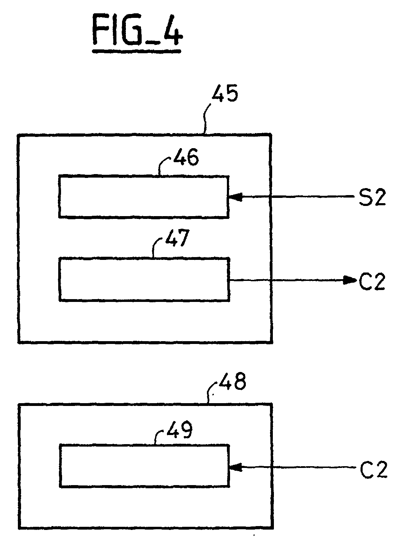

- a mobile station, such as illustrated at 45 on figure 4, essentially comprises, further to other classical means (not mentioned here and which may be classical):

  - means 46 for performing such a method, from signals noted S2 received from a mobile network entity,
  - means 47 for sending corresponding power control commands noted C2 to a mobile network entity,

- a mobile radiocommunication network entity, such as illustrated at 48 on figure 4, essentially comprises, further to other classical means (not mentioned here and which may be classical):

  - means 49 for receiving power control commands C2 from a mobile station, provided according to such a method .

Means such as 41 or 46 do not need to be more fully disclosed than as been made above by their function, for a person skilled in the art. Means such as 42, 44, 47, 49, may operate according to any known type of signalling procedures, or protocols, in such type of systems, and therefore do not either need to be more fully disclosed than has been made above, by their function.

**Claims**

1. A method for dynamically choosing a best parameter value among a plurality of possible parameter values for a power control algorithm in a mobile radiocommunication system, said method comprising:

   - regularly estimating (23), for each of said plurality of parameter values, a deviation value, representative of a deviation between an estimated transmission quality and a target transmission quality, if this parameter value had always been used on a time-interval on which said deviation value is estimated,
   - choosing (24) as best parameter value that parameter value that leads to the lowest deviation value.

2. A method according to claim 1, wherein said possible parameter values include various possible power control step sizes of said algorithm.

3. A method according to claim 2, wherein one of said possible power control step sizes corresponds to the case where said algorithm is inactive.

4. A method according to claim 1, wherein said possible parameter values include various possible repetition periods of said algorithm.

5. A method according to any of claims 1 to 4, wherein provision is made not to change the best parameter value too frequently.

6. A method according to any of claims 1 to 5, wherein said estimated transmission quality is represented by an estimated signal-to-interference ratio.

7. A method according to any of claims 1 to 5, wherein said estimated transmission quality is represented by a received signal power.

8. A method according to any of claims 1 to 7, wherein said estimated deviation value is represented by the variance of said estimated transmission quality.

9. A method according to any of claims 1 to 8, wherein said method is performed in the uplink transmission direction of said mobile radiocommunication system.

10. A method according to any of claims 1 to 8, wherein said method is performed in the downlink transmission direction of said mobile radiocommunication system.

11. A method according to any of claims 1 to 10, wherein said mobile radiocommunication system is of CDMA type.

12. A mobile radiocommunication network entity (40), comprising, for performing a method according to any of claims 1 to 11, in the uplink transmission direction of a mobile radiocommunication system:

    - means (41) for performing said method,
    - means (42) for sending corresponding power control commands (C1) to a mobile station (43).

13. A mobile radiocommunication system comprising at least one mobile radiocommunication network entity according to claim 12.

14. A mobile station(45), comprising , for performing a method according to any of claims 1 to 11, in the downlink transmission direction of a mobile radiocommunication system:

    - means (46) for performing said method,
    - means (47) for sending corresponding power control commands to a mobile radiocommunication network entity (48).

15. A mobile radiocommunication system comprising at least one mobile station according to claim 14.

# EP 1 037 483 B1

**Patentansprüche**

1. Verfahren zum dynamischen Wählen eines besten Parameterwerts unter einer Mehrzahl möglicher Parameterwerte für einen Leistungssteuer-Algorithmus in einem Mobilfunkkommunikationssystem, wobei das Verfahren umfasst:

   - regelmäßiges Schätzen (23) für jeden der Mehrzahl von Parameterwerten eines Abweichungswerts, der für eine Abweichung zwischen einer geschätzten Übertragungsqualität und einer Zielübertragungsqualität repräsentativ ist, wenn dieser Parameterwert immer an einem Zeitintervall verwendet wurde, an dem der Abweichungswert geschätzt wird,
   - Wählen (24) als besten Parameterwert den Parameterwert, der zu dem niedrigsten Abweichungswert führt.

2. Verfahren gemäß Anspruch 1, bei dem die möglichen Parameterwerte verschiedene mögliche Leistungssteuer-Schrittgrößen des Algorithmus umfassen.

3. Verfahren gemäß Anspruch 2, bei dem eine der möglichen Leistungssteuer-Schrittgrößen dem Fall entspricht, wobei der Algorithmus inaktiv ist.

4. Verfahren gemäß Anspruch 1, bei dem die möglichen Parameterwerte verschiedene mögliche Wiederholungszeitspannen des Algorithmus umfassen.

5. Verfahren gemäß einem der Ansprüche 1 bis 4, bei dem eine Vorkehrung getroffen wird, um den besten Parameterwert nicht zu häufig zu ändern.

6. Verfahren gemäß einem der Ansprüche 1 bis 5, bei dem die geschätzte Übertragungsqualität durch ein geschätztes Signalstörverhältnis dargestellt wird.

7. Verfahren gemäß einem der Ansprüche 1 bis 5, bei dem die geschätzte Übertragungsqualität durch eine empfangene Signalleistung dargestellt wird.

8. Verfahren gemäß einem der Ansprüche 1 bis 7, bei dem der geschätzte Abweichungswert durch die Varianz der geschätzten Übertragungsqualität dargestellt wird.

9. Verfahren gemäß einem der Ansprüche 1 bis 8, bei dem das Verfahren in der Uplink-Übertragungsrichtung des Mobilfunkkommunikationssystem durchgeführt wird.

10. Verfahren gemäß einem der Ansprüche 1 bis 8, bei dem das Verfahren in der Downlink-Übertragungsrichtung des Mobilfunkkommunikationssystems durchgeführt wird.

11. Verfahren gemäß einem der Ansprüche 1 bis 10, bei dem das Mobilfunkkommunikationssystem von CDMA-Typ ist.

12. Mobilfunkkommunikationsnetzwerk-Instanz (40), die zum Durchführen eines Verfahrens gemäß einem der Ansprüche 1 bis 11 in der Uplink-Übertragungsrichtung eines Mobilfunkkommunikationssystems umfasst:

    - Mittel (41) zum Durchführen des Verfahrens,
    - Mittel (42) zum Senden entsprechender Leistungssteuerbefehle (C1) an eine Mobilstation (43).

13. Mobilfunkkommunikationssystem, das mindestens eine Mobilfunkkommunikationsnetzwerk-Instanz gemäß Anspruch 12 umfasst.

14. Mobilstation (45), die zum Durchführen eines Verfahrens gemäß einem der Ansprüche 1 bis 11 in der Downlink-Übertragungsrichtung eines Mobilfunkkommunikationssystems umfasst:

    - Mittel (46) zum Durchführen des Verfahrens,
    - Mittel (47) zum Senden entsprechender Leistungssteuerbefehle an eine

    Mobilfunkkommunikationsnetzwerk-Instanz (48).

**15.** Mobilfunkkommunikationssystem, das mindestens eine Mobilstation gemäß Anspruch 14 umfasst.

**Revendications**

**1.** Procédé pour choisir dynamiquement une meilleure valeur de paramètre parmi une pluralité de valeurs de paramètre possibles pour un algorithme de commande de puissance dans un système de radiocommunication mobile, ledit procédé comprenant :

- une estimation régulièrement (23), pour chacune de ladite pluralité des valeurs de paramètre, une valeur de déviation, représentative d'une déviation entre une qualité de transmission estimée et une qualité de transmission cible, si cette valeur de paramètre a toujours été utilisée sur un intervalle de temps sur lequel ladite valeur de déviation est estimée,
- un choix (24) comme meilleure valeur de paramètre la valeur de paramètre qui conduit à la plus faible valeur de déviation.

**2.** Procédé selon la revendication 1, dans lequel lesdites valeurs de paramètre possibles comprennent diverses tailles de pas de commande de puissance possibles dudit algorithme.

**3.** Procédé selon la revendication 2, dans lequel une desdites tailles de pas de commande de puissance possibles correspond au cas où ledit algorithme est inactif.

**4.** Procédé selon la revendication 1, dans lequel lesdites valeurs de paramètre possibles comprennent diverses périodes de répétition possibles dudit algorithme.

**5.** Procédé selon l'une quelconque des revendications 1 à 4, où la fourniture est faite pour ne pas changer la meilleure valeur de paramètre trop fréquemment.

**6.** Procédé selon l'une quelconque des revendications 1 à 5, dans lequel ladite qualité de transmission estimée est représentée par un rapport estimé signal sur interférence.

**7.** Procédé selon l'une quelconque des revendications 1 à 5, dans lequel ladite qualité de transmission estimée est représentée par une puissance de signal reçu.

**8.** Procédé selon l'une quelconque des revendications 1 à 7, dans lequel ladite valeur de déviation estimée est représentée par la variance de ladite qualité de transmission estimée.

**9.** Procédé selon l'une quelconque des revendications 1 à 8, dans lequel ledit procédé est réalisé dans la direction de transmission de liaison montante dudit système de radiocommunication mobile.

**10.** Procédé selon l'une quelconque des revendications 1 à 8, dans lequel ledit procédé est réalisé dans la direction de transmission de liaison descendante dudit système de radiocommunication mobile.

**11.** Procédé selon l'un quelconque des revendications 1 à 10, dans lequel ledit système de radiocommunication mobile est du type CDMA.

**12.** Entité de réseau de radiocommunication mobile (40), comprenant, pour réaliser un procédé selon l'une quelconque des revendications 1 à 11, dans la direction de transmission de liaison montante d'un système de radiocommunication mobile :

- un moyen (41) pour réaliser ledit procédé,
- un moyen (42) pour envoyer des commandes de commande de puissance correspondante (C1) à une station mobile (43).

**13.** Système de radiocommunication mobile comprenant au moins une entité de réseau de radiocommunication mobile selon la revendication 12.

**14.** Station mobile (45), comprenant, pour réaliser un procédé selon l'une quelconque des revendications 1 à 11, dans la direction de transmission de liaison descendante d'un système de radiocommunication mobile :

- un moyen (46) pour réaliser ledit procédé,
- un moyen (47) pour envoyer des commandes de commande de puissance correspondante à une entité de réseau de radiocommunication mobile (48).

15. Système de radiocommunication mobile comprenant au moins une station mobile selon la revendication 14.

# FIG_1

## FIG_2

# FIG_3

# FIG_4